# EUROPEAN PATENT SPECIFICATION

(11) **EP 3 043 194 B1**
(45) Date of publication and mention of the grant of the patent: **29.04.2020**
(21) Application number: 16150151.5
(22) Date of filing: 05.01.2016
(51) Int. Cl.: G01V 1/145, G01V 1/38

(54) **COMPLIANCE CHAMBER WITH LINEAR MOTOR FOR MARINE ACOUSTIC VIBRATORS**
NACHGIEBIGE KAMMER MIT LINEARMOTOR FÜR MEERESSCHALLSCHWINGER
CHAMBRE DE COMPLIANCE AVEC MOTEUR LINÉAIRE POUR VIBRATEURS ACOUSTIQUE MARINS

(30) Priority: 08.01.2015 US 201562101250 P; 12.11.2015 US 201514939124
(43) Date of publication of application: 13.07.2016
(73) Proprietor: PGS Geophysical AS, 0283 Oslo (NO)
(72) Inventor: Engdahl, Sven Goran, 183 63 Taby (SE); Zrostlik, Rick Leroy, Ames, IA Iowa 50010 (US)
(74) Representative: Gill Jennings & Every LLP

(56) References cited:
- EP-A2- 2 801 843
- US-A1- 2011 085 422
- US-A1- 2014 238 773

## Description

### BACKGROUND

Embodiments relate generally to marine acoustic vibrators for marine seismic surveys, and, more particularly, embodiments relate to using compliance chambers coupled to linear motors in marine acoustic vibrators to compensate for any remaining effects of the stiffness and/or friction occurring in the actuating components of the compliance chamber and also to compensate for any of the inertial forces of the moving masses.

Sound sources are generally devices that generate acoustic energy. One use of sound sources is in marine seismic surveys. Sound sources may be employed to generate acoustic energy that travels downwardly through water and into formations below the bottom of a body of water. After interacting with the formations, for example, at the boundaries between different subsurface layers, some of the acoustic energy may be reflected back toward the water surface and detected by specialized sensors. The detected energy may be used to infer certain properties of the formations, such as the structure, mineral composition and fluid content. These inferences may provide information useful in the recovery of hydrocarbons.

Most of the sound sources employed today in marine seismic surveys are of the impulsive type, in which efforts are made to generate as much energy as possible during as short a time span as possible. The most commonly used of these impulsive-type sources are air guns that typically utilize a compressed gas to generate a sound wave. Other examples of impulsive-type sources include explosives and weight-drop impulse sources. Marine acoustic vibrators are another type of sound source that can be used in marine seismic surveys. Examples of marine acoustic vibrators include flextensional shell marine acoustic vibrators, piston plate marine acoustic vibrators, hydraulically powered marine acoustic vibrators, electro-mechanical marine acoustic vibrators, electrical marine acoustic vibrators, electrical machine marine acoustic vibrators, and marine acoustic vibrators employing electrostrictive (e.g., piezoelectric) or magnetostrictive material. Marine acoustic vibrators typically generate vibrations through a range of frequencies in a pattern known as a "sweep" or "chirp."

A marine acoustic vibrator may be actuated to radiate sound by moving one or more sound radiating surfaces that may be connected to a mechanical actuator. During this motion, these sound radiating surfaces displace a certain volume. This displaced volume may be the same outside and inside the marine acoustic vibrator. Inside the marine acoustic vibrator, the volume displacement may cause a pressure variation that in absolute values may increase substantially while the marine acoustic vibrator is lowered to increasing depths. As the internal gas (e.g., air) in the marine acoustic vibrator increases in pressure, the bulk modulus (or "stiffness") of the internal gas also rises. Put in another way, increasing the stiffness of the internal gas increases the gas-spring stiffness within the marine acoustic vibrator. As used herein, the term "gas-spring" is defined as an enclosed volume of gas that may absorb shock or fluctuations of load due to the ability of the enclosed volume of gas to resist compression. Increasing the gas-spring stiffness (i.e. increasing the stiffness of the gas in the enclosed volume) thus increases the capability of the enclosed volume of gas to resist compression. This increase in the gas-spring stiffness tends to be a function of the operating depth of a marine acoustic vibrator that is pressure compensated. Further, the stiffness of the acoustic components of the marine acoustic vibrator and the internal gas are two quantities that influence the marine acoustic vibrator's resonance frequency. Accordingly, the resonance frequency generated by the marine acoustic vibrator may undesirably increase when the marine acoustic vibrator is disposed (e.g., towed) at depth. This may be especially important in marine acoustic vibrators where the interior volume of the marine acoustic vibrator may be pressure balanced with the external pressure. Hence, in marine seismic surveys it may be desirable that the resonance frequency is retained essentially independently of the operation depth and/or that the resonance frequency may be controlled so as to be below and/or above its nominal (e.g., measured at/near the surface of a body of water) resonance frequency.

EP 2801843 describes an underwater sound source comprising a compliance chamber that is used to compensate for changes in the shell internal gas pressure. It further comprises a compliance chamber piston and a spring element exerting a biasing action on the piston.

EP-A-2883088 describes an underwater sound projector for producing time-harmonic waveforms comprising two pistons positioned on either side of a single electro-magnetic force generator substantially having mechanical and magnetic symmetry about its geometric center to substantially cancel reaction loads that occur when the pistons are actuated. The underwater sound projector optionally also includes control systems to improve the fidelity of the force generator, provide pressure compensation to the pistons, finely adjust the static position of the pistons, and change the depth and roll when it is configured as tow body. A plurality of underwater sound projectors can be configured in an array. A load-bearing umbilical can connect the underwater sound projectors to a ship, transmit electrical power to each array element and serve as a duplex data transmission medium to route commands from the ship to the projector and report machinery status.

### BRIEF DESCRIPTION OF THE DRAWINGS

These drawings illustrate certain aspects of some of the embodiments of the present invention and should not be used to limit or define the invention.
FIG. 1 illustrates an example embodiment of a flextensional shell marine acoustic vibrator comprising a compliance chamber.
FIG. 2 illustrates an example embodiment of a piston plate marine acoustic vibrator comprising a compliance chamber.
FIG. 3 illustrates an example embodiment of a marine acoustic vibrator comprising a compliance chamber.
FIG. 4 is a graph of force-deflection for an example nonlinear spring element.
FIG. 5 illustrates another example embodiment of a flextensional shell marine acoustic vibrator comprising a compliance chamber.
FIG. 6 illustrates a flextensional shell compliance chamber within a marine acoustic vibrator.
FIG. 7 illustrates another example embodiment of a marine acoustic vibrator comprising a compliance chamber.
FIG. 8 is an example embodiment of a marine seismic survey system using a marine acoustic vibrator.

### DETAILED DESCRIPTION

It is to be understood that the present disclosure is not limited to particular devices or methods, which may, of course, vary. It is also to be understood that the terminology used herein is for the purpose of describing particular embodiments only, and is not intended to be limiting. All numbers and ranges disclosed herein may vary by some amount. Whenever a numerical range with a lower limit and an upper limit is disclosed, any number and any included range falling within the range are specifically disclosed. Although individual embodiments are discussed, the invention covers all combinations of all those embodiments. As used herein, the singular forms "a", "an", and "the" include singular and plural referents unless the content clearly dictates otherwise. Furthermore, the word "may" is used throughout this application in a permissive sense (i.e., having the potential to, being able to), not in a mandatory sense (i.e., must). The term "include," and derivations thereof, mean "including, but not limited to." The term "coupled" means directly or indirectly connected. If there is any conflict in the usages of a word or term in this specification and one or more patent or other documents that may be incorporated herein by reference, the definitions that are consistent with this specification should be adopted for the purposes of understanding the invention.

Embodiments relate generally to marine acoustic vibrators for marine seismic surveys, and, more particularly, embodiments relate to using compliance chambers coupled to linear motors in marine acoustic vibrators to compensate for any remaining effects of the stiffness and/or friction occurring in the actuating components of the compliance chamber and also to compensate for any of the inertial forces of the moving masses. As discussed in more detail below, the compliance chamber helps to maintain the resonance frequency essentially independent of the operation depth and/or allow for control of the resonance frequency so as to be below and/or above its nominal (e.g., measured at/near the surface of a body of water) resonance frequency. As will be discussed in more detail below, the forces generated by a pressure differential, a spring function system, and a linear motor are used to maintain and/or control the resonance frequency of the marine acoustic vibrator at depth. In particular, the linear motor is actuated to mitigate any remaining effects of the stiffness and/or friction which may occur in the spring function system or in any of the other actuating components of the compliance chamber as well as to compensate for any of the inertial forces of the moving masses. Advantageously, these features may allow the marine acoustic vibrators to display a low resonance frequency in a seismic frequency range of interest at depth. In particular embodiments, the marine acoustic vibrators may display a resonance frequency within a seismic frequency range of about 1 Hz to about 10 Hz when submerged in water at a depth of from about 0 meters to about 300 meters.

Marine acoustic vibrators may be used in marine seismic surveys to generate acoustic energy that may travel downwardly through a body of water and also downwardly into formations below a bottom of the body of water. Embodiments of the marine acoustic vibrators may include flextensional shell marine acoustic vibrators, piston plate marine acoustic vibrators, hydraulically powered marine acoustic vibrators, electro-mechanical marine acoustic vibrators, electrical marine acoustic vibrators, electrical machine marine acoustic vibrators, and marine acoustic vibrators employing electrostrictive (e.g., piezoelectric) or magnetostrictive material. It is to be noted that unless specifically excluded, any disclosure regarding compliance chambers may be embodied by any of the embodiments of the type of marine acoustic vibrators discussed herein and that no embodiment of a compliance chamber is to be restricted to a specific type of marine acoustic vibrator.

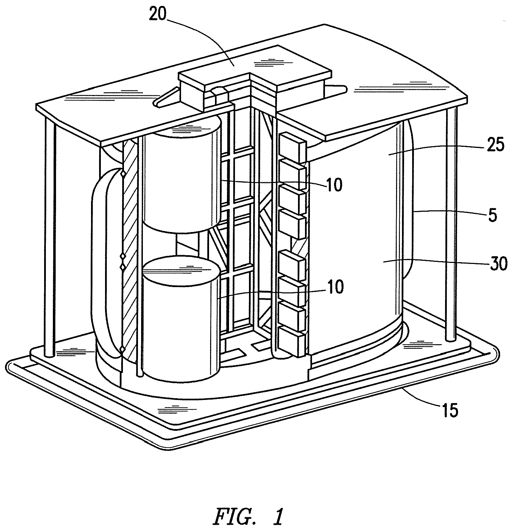

One type of a marine acoustic vibrator is a flextensional shell marine acoustic vibrator. Flextensional shell marine acoustic vibrators may include actuators and transducers and may act as mechanical transformers by transforming and amplifying the displacement and force generated to meet the demands of different applications. Flextensional shell marine acoustic vibrators are generally marine acoustic vibrators having an outer shell that moves back and forth by flexing to generate acoustic energy. An example embodiment of flextensional shell marine acoustic vibrator is illustrated in FIG. 1. In the example embodiment, the flextensional shell marine acoustic vibrator 5 employs one or more compliance chambers 10, for example, to compensate for pressure changes of the marine acoustic vibrator internal gas pressure of the flextensional shell marine acoustic vibrator 5. The flextensional shell marine acoustic vibrator 5 of FIG. 1 is shown in partial cross-section. As illustrated, the flextensional shell marine acoustic vibrator 5 may be mounted within a frame 15. A bracket 20 may be mounted to the top of the frame 15. The bracket 20 may be used for deploying the flextensional shell marine acoustic vibrator 5 in a body of water. The flextensional shell marine acoustic vibrator 5 may comprise at least one sound radiating surface 25 as illustrated by flextensional shell 30. The marine acoustic vibrator internal volume is at least partially defined by the sound radiating surface 25. As illustrated, the compliance chambers 10 may be disposed within the flextensional shell 30. Alternatively, the compliance chambers 10 may be disposed on the exterior of the flextensional shell 30. While FIG. 1 illustrates two compliance chambers 10 disposed within the flextensional shell 30, it should be understood that the invention is applicable to the use of any number of compliance chambers 10. By way of example, embodiments may include the use of one, two, three, four, or more compliance chambers 10 for the flextensional shell marine acoustic vibrator 5, disposed within, on the exterior thereof, or both. In the illustrated embodiment, the flextensional shell 30 may be elliptical in shape or may be any other suitable shape, including convex, concave, flat, or a combination thereof. While not illustrated, the flextensional shell 30 may be formed, for example, by two shell side portions that may be mirror images of one another.

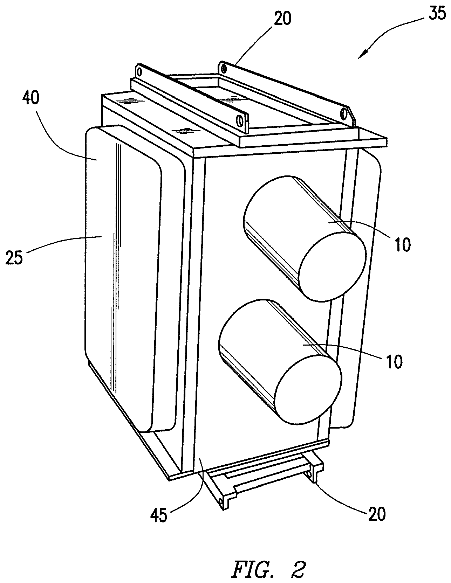

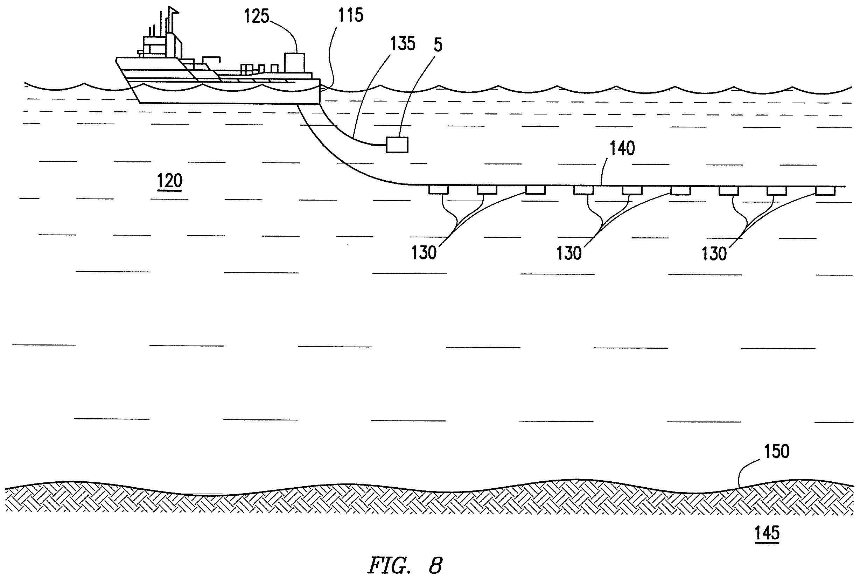

In some embodiments, piston plate marine acoustic vibrators may generally include marine acoustic vibrators having a piston plate that moves back and forth to generate acoustic energy. FIG. 2 is an example embodiment of a piston plate marine acoustic vibrator, illustrated as piston plate marine acoustic vibrator 35. As illustrated, piston plate marine acoustic vibrator 35 may comprise at least one sound radiating surface 25 and compliance chambers 10. The sound radiating surface 25 is represented in FIG. 2 by piston plate 40. Analogous to the flextensional shell marine acoustic vibrator 5 of FIG. 1, the marine acoustic vibrator internal volume is at least partially defined by the sound radiating surface 25. In the illustrated embodiment, compliance chambers 10 are disposed on the exterior of containment housing 45 of the piston plate marine acoustic vibrator 35. In alternative embodiments, compliance chambers 10 may be disposed on the interior of containment housing 45 of piston plate marine acoustic vibrator 35. While FIG. 2 illustrates two compliance chambers 10 disposed on the exterior of containment housing 45 of piston plate marine acoustic vibrator 35, it should be understood that the invention is applicable to the use of any number of compliance chambers 10, disposed within, on the exterior thereof, or both. By way of example, embodiments may include the use of one, two, three, four, or more compliance chambers 10 for the piston plate marine acoustic vibrator 35. Piston plate marine acoustic vibrator 35 may include brackets 20, which may be separately mounted on opposing sides of piston plate marine acoustic vibrator 35, or may be mounted on adjacent sides. Alternatively, only one bracket 20 may be used. Brackets 20 may be used for hoisting piston plate marine acoustic vibrator 35, for example when deploying piston plate marine acoustic vibrator 35 in a body of water. Brackets 20 may facilitate attachment of piston plate marine acoustic vibrator 35 to tow lines coupled to a survey vessel (e.g., survey vessel 115 on FIG. 8), anchor lines, or other suitable device or mechanism used in conjunction with disposing or towing piston plate marine acoustic vibrator 35 through a body of water.

The marine acoustic vibrators (e.g., flextensional shell marine acoustic vibrator 5 on FIG. 1 and piston plate marine acoustic vibrator 35 on FIG. 2) discussed herein comprise an internal volume in which a gas (e.g., air, oxygen, carbon dioxide, etc.) or other fluid may be disposed. The internal volume of a marine acoustic vibrator is referred to herein as the "marine acoustic vibrator internal volume." A gas disposed within the marine acoustic vibrator internal volume (i.e. a marine acoustic vibrator internal gas) has a gas pressure. This gas pressure is referred to herein as the "marine acoustic vibrator internal gas pressure." In some embodiments, the marine acoustic vibrators may have a pressure compensation system. The pressure compensation system may be used, for example, to equalize the marine acoustic vibrator internal gas pressure with the pressure external to the marine acoustic vibrator, i.e. the pressure exerted by the body of water in which the marine acoustic vibrator is disposed. The pressure compensation system may be used, for example, when a marine acoustic vibrator needs to be disposed (e.g., towed or anchored) at depth to achieve a given level of acoustic output. As the depth of a marine acoustic vibrator increases, the external pressure increases. In such embodiments, the marine acoustic vibrator internal gas pressure may be increased to equalize pressure with the increasing external pressure. For example, a gas (e.g., air) or liquid (e.g., water) may be introduced into the marine acoustic vibrator to increase the marine acoustic vibrator internal gas pressure to approach and/or equalize pressure with the increasing external pressure. In some embodiments, the introduced gas or liquid may undergo a phase transition due to changing conditions within the marine acoustic vibrator (e.g., a change in pressure, temperature, etc.). Shifting the phase of matter may decrease or increase the marine acoustic vibrator internal gas pressure to approach and/or equalize the increasing external pressure.

Without being limited by theory, increasing the marine acoustic vibrator internal gas pressure may stiffen the gas-spring in the marine acoustic vibrator internal volume, and this stiffening may undesirably impact the resonance frequency of the marine acoustic vibrator. Specifically, the resonance frequency may increase as the gas-spring stiffens due to an increase in the marine acoustic vibrator internal gas pressure. Among other things, the resonance frequency of the marine acoustic vibrator may be based on the combination of the stiffness of the gas-spring of the gas in the marine acoustic vibrator internal volume and the spring constant of any mechanical actuator and/or structural member of the marine acoustic vibrator (e.g., mechanical springs, nonmechanical springs, linear springs, nonlinear springs, etc.) used to actuate the sound radiating surface 25. Thus, an increase in gas-spring stiffness may also result in an increase in the resonance frequency of the marine acoustic vibrator. As such, the resonance frequency of a marine acoustic vibrator disposed at depth may undesirably increase when the marine acoustic vibrator internal gas pressure is compensated by equalization with the external pressure (e.g., by using a pressure compensation system).

To compensate for changes in the marine acoustic vibrator internal gas pressure, a compliance chamber 10 is employed. The compliance chamber 10 may contain a gas (e.g., air) or liquid (e.g., water). The internal volume of compliance chamber 10 will be referred to herein as the "compliance chamber internal volume." The internal gas pressure of compliance chamber 10 will be referred to herein as the "compliance chamber internal gas pressure." As discussed below, some embodiments of the compliance chamber 10 may comprise a compliance chamber internal gas pressure that is a low pressure. "Low pressure" when used in the context of compliance chamber 10 is defined herein as a compliance chamber internal gas pressure that is atmospheric or less than atmospheric.

The compliance chamber 10 may comprise any type of compliance chamber. For example, the compliance chamber 10 may comprise a high pressure gas-spring compliance chamber (e.g., a compliance chamber comprising a linear high pressure gas-spring), a low pressure gas-spring compliance chamber (e.g., a compliance chamber comprising a compliance chamber piston with a variable surface area as well as a low pressure gas-spring), a nonlinear spring compliance chamber (e.g., a compliance chamber comprising a nonlinear spring element), a linear spring compliance chamber (e.g., a compliance chamber comprising a linear spring element), nonlinear geared compliance chamber (e.g., a compliance chamber comprising a nonlinear gear, a compliance chamber piston with variable velocity, and a low pressure gas-spring), a two-phase compliance chamber (e.g., a compliance chamber comprising a two-phase gas-liquid medium), and the like. In every type of compliance chamber 10 which may be used, embodiments include a linear motor, as discussed below, coupled to the compliance chamber 10 in such a way so as to mitigate any remaining effects of the stiffness and/or friction which may occur in the spring function system of the compliance chamber 10 or in any of the other actuating components of the compliance chamber 10 and also to compensate for any of the inertial forces of the moving masses of the marine acoustic vibrator and the compliance chambers 10. The linear motor is thusly used to adjust the marine acoustic vibrator internal gas pressure to approach and/or equalize the hydrostatic pressure.

In some embodiments, the compliance chamber internal volume may comprise a sealed volume with a compliance chamber internal gas pressure of less than 1 atmosphere when at the surface of a body of water (less than about 1 meter depth). Alternatively, the compliance chamber internal gas pressure may be greater than atmospheric pressure when at the surface. Further alternatively, the compliance chamber internal gas pressure may be equal to atmospheric pressure when at the surface. In some embodiments, when the marine acoustic vibrators are at operational depth, the compliance chamber internal gas pressure may be less than the marine acoustic vibrator internal gas pressure. In some embodiments, the marine acoustic vibrators may be operated, for example, at a depth of from about 1 meter to about 300 meters and, more particularly, from about 1 meter to about 100 meters.

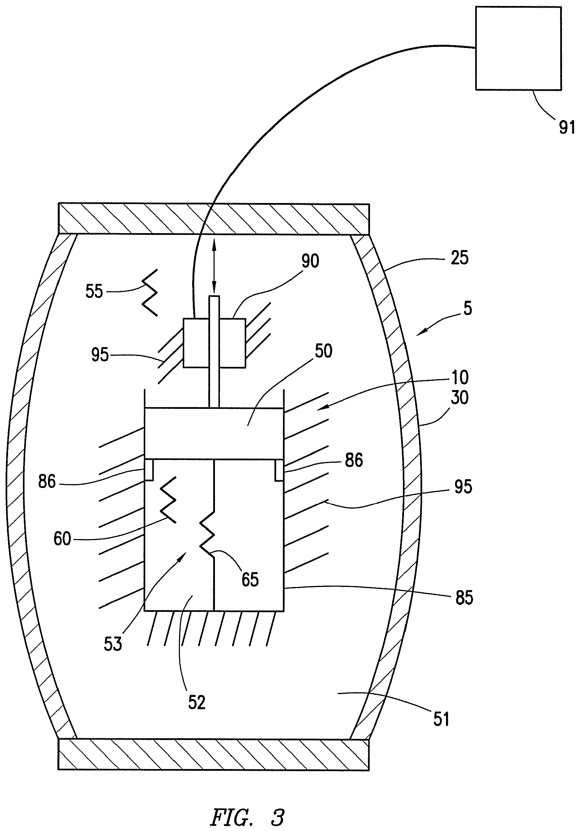

FIG. 3 illustrates an example embodiment of a flextensional shell marine acoustic vibrator 5. In alternative embodiments, the marine acoustic vibrator may be any type of marine acoustic vibrator including piston plate marine acoustic vibrator 35 as illustrated in FIG. 2. In the embodiments, as illustrated in FIG. 3, a compliance chamber 10 comprises at least one compliance chamber piston 50. The type of compliance chamber 10 described in FIG. 3 is an example of a nonlinear spring compliance chamber possessing a spring function system 53, wherein the spring function system 53 may comprise a nonlinear spring element 65. In some embodiments, compliance chamber piston 50 may be attached to compliance chamber housing 85 by seals 86, which may be an elastic component, for example. Seals 86 may be any component (e.g., a bellow, piston ring) used to couple the compliance chamber piston 50 to the compliance chamber housing 85. In alternative examples, not forming part of the invention, the compliance chamber piston 50 may be replaced with a flexible membrane (not shown). In the embodiments, the pressurized gas within the marine acoustic vibrator internal volume 51 may act on the outside of the compliance chamber piston 50 and attempt to move the compliance chamber piston 50 inward into the compliance chamber internal volume 52. Any gas present within the compliance chamber internal volume 52 may be compressed. This compressed gas, if present in any appreciable amount, may form a compliance chamber gas-spring 60. In the embodiments, a compliance chamber gas-spring 60 may degrade the function of the compliance chamber 10. Thus, in some embodiments, the compliance chamber internal gas pressure may comprise a low pressure, as defined herein, to minimize the effect of the compliance chamber gas-spring 60. In FIG. 3, marine acoustic vibrator gas-spring 55 and compliance chamber gas-spring 60 are shown schematically by a spring symbol. The spring function system 53 may be used to provide a force against the internal side of the compliance chamber piston 50 (i.e. the side comprising the compliance chamber internal volume 52). In the specific example of FIG. 3, the desired spring function of the spring function system 53 is specifically performed by the nonlinear spring element 65.

When the marine acoustic vibrator is actuated to radiate the sound radiating surface 25, the sound radiating surface 25 (e.g., flextensional shell 30 as represented by the flextensional shell marine acoustic vibrator 5 embodiment illustrated in FIG. 3) may radiate and displace a volume or volumes. The compliance chamber 10 functions such that the compliance chamber piston 50 follows the changes of displaced volume; the marine acoustic vibrator internal volume 51 and marine acoustic vibrator internal gas pressure may be held nearly constant. In accordance with present embodiments, compliance chamber internal volume 52 may be sealed so as to not result in the compliance chamber internal volume 52 being in direct contact with any marine acoustic vibrator internal gas present in the marine acoustic vibrator internal volume 51. In order to produce a compliance chamber piston 50 that can follow the changes of displaced volumes when the sound radiating surface 25 actuates, a nonlinear spring element 65 may be used to assist in the movement of the compliance chamber piston 50.

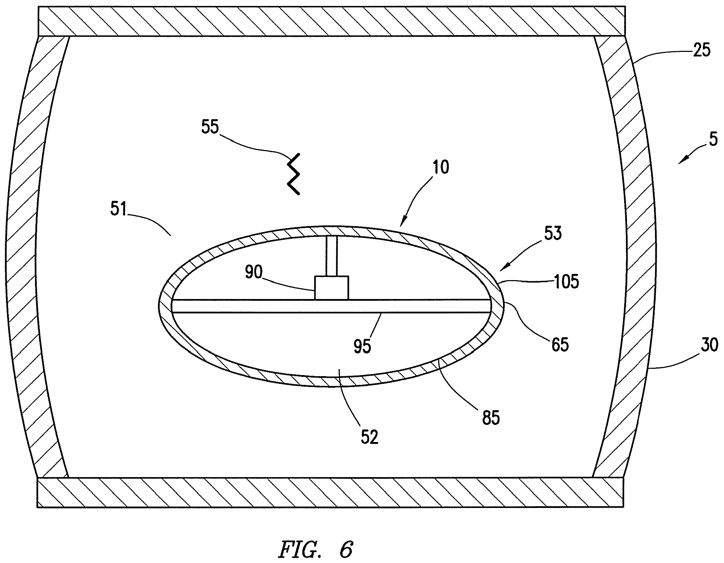

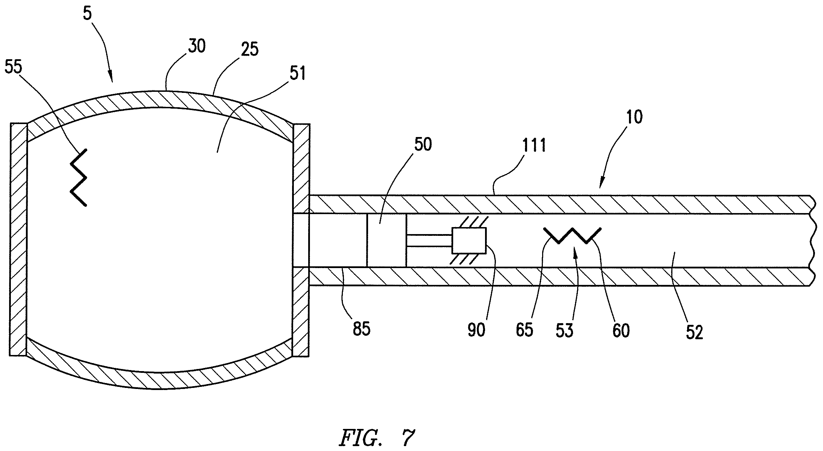

As illustrated in FIG. 3, spring function system 53, and specifically the nonlinear spring element 65, is disposed within the compliance chamber internal volume 52 and coupled to compliance chamber piston 50. The nonlinear spring element 65 may be any nonlinear spring suitable for creating a resonant system formed by the compliance chamber piston 50, the nonlinear spring element 65, and the linear motor 90. In some embodiments, nonlinear spring element 65 may be used to obtain a marine acoustic vibrator resonance frequency that is almost independent of depth. In some embodiments, nonlinear spring element 65 may also have a biasing effect, enabling the compliance chamber internal gas pressure to differ from marine acoustic vibrator internal gas pressure. In embodiments, the nonlinear spring element 65 may have a comparatively lesser stiffness for volume displacements (e.g., volume displacements produced by sound radiating surface 25) not occurring at depth, but may be increasingly stiff for volume displacements occurring as the flextensional shell marine acoustic vibrator 5 is disposed at depth (e.g., towed or anchored at depth) where the marine acoustic vibrator internal gas pressure may be increased. By way of example, nonlinear spring element 65 may be a compression spring, a torsion spring, a disc spring, a combination of series and/or parallel connected springs, and the like. In still other examples, the nonlinear spring element 65 may be a flextensional shell, a gas-spring, or a portion of matter capable of phase transition (e.g., liquid to gas and vice versa) under the conditions present in the compliance chamber 10 at depth. As an example, a nonlinear spring element 65 in the form of a flextensional shell is illustrated in FIG. 6. As another example, a nonlinear spring element 65 in the form a gas-spring is illustrated in FIG. 7. FIGs. 6 and 7 will be discussed in more detail below. An example of a nonlinear spring element 65 utilizing matter capable of phase transition may comprise a gas or liquid capable of undergoing a phase transition due to changing conditions within the marine acoustic vibrator (e.g., a change in pressure, temperature, etc.). Shifting the phase of matter may decrease or increase the compliance chamber internal gas pressure which may consequently adjust the marine acoustic vibrator internal gas pressure to approach and/or equalize the hydrostatic pressure.

With continued reference to FIG. 3, the spring function system 53, and specifically nonlinear spring element 65, may be tuned to form a resonant system together with the mass of the compliance chamber piston 50 and the linear motor 90, enabling the flextensional shell marine acoustic vibrator 5 to produce a resonance frequency close to the desired resonance frequency of the flextensional shell marine acoustic vibrator 5. In some embodiment, the spring function system 53 may be a system that performs the function of a spring (e.g., a mechanical spring). The spring function system 53 may comprise any number of components necessary to achieve the functionality of a spring. The type of spring formed may be a linear or nonlinear spring as desired. The type of spring function system 53 used may be dependent upon the type of compliance chamber 10 chosen for the flextensional shell marine acoustic vibrator 5 or type of marine acoustic vibrator. The type of compliance chamber 10 used may be determined by the type of marine acoustic vibrator, such as flextensional shell marine acoustic vibrator 5 on FIG. 3, chosen for a specific application. Thus, the type of spring function system 53 used in embodiments, may be dependent upon the type of marine acoustic vibrator and the desired application.

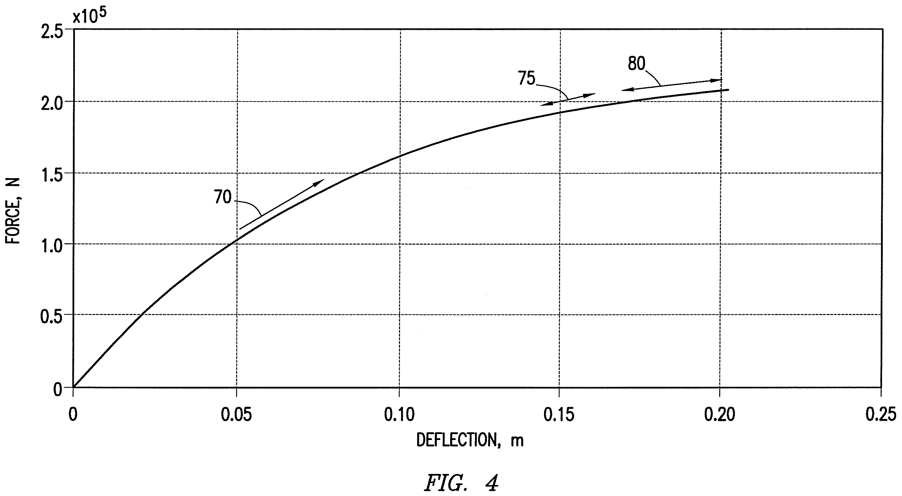

FIG. 4 is a diagram of a force-deflection curve for a nonlinear spring element 65. The nonlinear spring element 65 comprises two stacks of disc springs in accordance with the embodiments described herein. The force-deflection curve models the response of the two spring stacks to forces encountered when employed in a compliance chamber 10. The initial compression of the nonlinear spring element 65 during descent of a marine acoustic vibrator from a depth of 0 meters to about 50 meters is illustrated by arrow 70. The compression of the nonlinear spring element 65 during operation of a marine acoustic vibrator at a depth of about 50 meters is shown along arrow 75. The nonlinear spring element 65 has a safety margin as shown along arrow 80. As illustrated by FIG. 4, the nonlinear spring element 65 may be advantageous in some embodiments due to their softening response as the force increases.

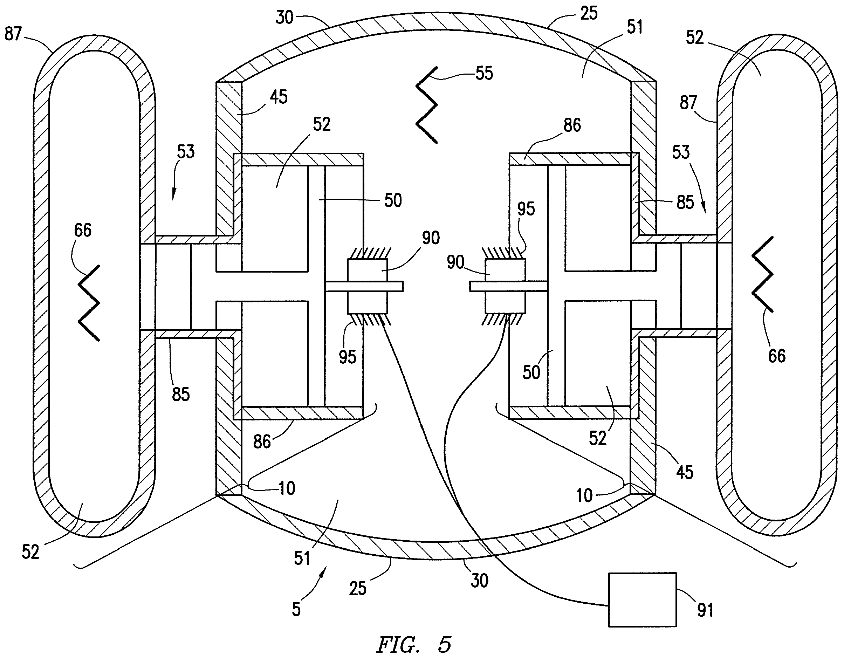

As discussed above, examples of spring function systems 53 may be dependent upon the compliance chambers 10 in which they are used. For example, FIG. 5 depicts a type of flextensional shell marine acoustic vibrator 5 coupled to type of compliance chamber 10 known as a high pressure gas-spring compliance chamber. The spring function system 53 of this type of compliance chamber 10 may comprise a linear high pressure gas-spring 66, which is illustrated schematically by a spring symbol disposed within a high pressure bottle 87 which is a component of the spring function system 53 and the compliance chamber 10. The compliance chamber internal volume 52 comprises two portions: (1) the high pressure volume of the linear high pressure gas-spring 66 in the high pressure bottle 87, and (2) a portion of the compliance chamber internal volume 52 defined by seals 86 and compliance chamber piston 50. The linear high pressure gas-spring 66 is separated from the marine acoustic vibrator internal volume 51 by seals 86 (e.g., piston seals, bellows, etc.) and compliance chamber piston 50. This specific compliance chamber piston 50 has two different piston areas that are connected to each other by a stiff rod. The larger piston area of compliance chamber piston 50 contacts the marine acoustic vibrator internal volume 51 and the second portion of compliance chamber internal volume 52. This larger piston area also at least partially isolates the marine acoustic vibrator internal volume 51 and the second portion of compliance chamber internal volume 52. The smaller piston area of compliance chamber piston 50 contacts both portions of the compliance chamber internal volume 52. The second portion of compliance chamber internal volume 52 comprises a low pressure as defined herein. The first portion of compliance chamber internal volume 52 (defined by compliance chamber piston 50 and high pressure bottle 87) comprises a high pressure, which functions as the high pressure gas-spring 66. This smaller piston area also at least partially isolates the low pressure second portion of the compliance chamber internal volume 52 and the high pressure first portion of the compliance chamber internal volume 52 comprising the high pressure gas-spring 66. The spring function system 53 of the compliance chamber 10 illustrated by FIG. 5 performs an analogous spring function as the spring function system 53 illustrated by FIG. 3. Linear motor 90 is used to form a resonant system with the linear high pressure gas-spring 66 and to mitigate any remaining effects of the stiffness and/or friction which may occur in the spring function system 53 or in any of the other actuating components of the compliance chamber 10 and also to compensate for any of the inertial forces of any of the moving masses of the marine acoustic vibrator and the compliance chambers. The linear motor 90 is thusly used to adjust the marine acoustic vibrator internal gas pressure to approach and/or equalize the hydrostatic pressure.

With reference to FIGs. 3 and 5, compliance chamber 10 may comprise a compliance chamber housing 85. In the embodiments described in FIGs. 3 and 5, the compliance chamber internal volume 52 may be at least partially defined by compliance chamber housing 85, the compliance chamber piston 50, and seals 86. Compliance chamber housing 85 may be made of any such suitable materials, including, without limitation, metals and plastics. Compliance chamber piston 50 may be slidable in compliance chamber housing 85 such that, when driven into or out of compliance chamber housing 85, the compliance chamber internal volume 52 may be changed. Compliance chamber piston 50 may be designed with sufficient displacement in compliance chamber housing 85 to compensate for a change in marine acoustic vibrator internal gas pressure, for example, due to a change in depth and/or any change in marine acoustic vibrator internal volume 51 due to the actuation of a sound radiating surface 25. The compliance chamber internal gas pressure may comprise a low pressure as defined herein.

The compliance chamber piston 50 may be sealed in compliance chamber housing 85 by seals 86, which, as discussed above may be an O-ring, rubber seal, piston rings, bellows, etc. Compliance chamber piston 50 may be a disk, cylindrical element, or any configuration suitable to affect a desired change in compliance chamber internal volume 52. For example, compliance chamber piston 50 may have a different configuration, including square, rectangular, or oblong, among others. Further, the compliance chamber piston 50 may comprise an adjustable surface area which may allow for control of the force exerted by the pressure differential on the compliance chamber piston 50. Alternative embodiments may comprise attaching a nonlinear linkage assembly to the compliance chamber piston 50, for example, in a nonlinear geared compliance chamber 10. The nonlinear linkage assembly may comprise a nonlinear gear, camshaft, and belt arrangement. The nonlinear linkage assembly may be coupled to a separate low pressure piston with its own housing and an internal volume comprising an internal pressure which is lower than the compliance chamber internal gas pressure. The low pressure piston may be coupled to the compliance chamber piston 50 via the nonlinear linkage assembly and the two would thus exist in a nonlinear relationship. The low pressure piston and the nonlinear linkage assembly would thus comprise the spring function system 53.

With continued reference to FIGs. 3 and 5, compliance chamber 10 further comprises a linear motor 90. The resonant system formed by the compliance chamber piston 50, the mass of its load, and the spring function system 53 as described above, may not sufficiently maintain the marine acoustic vibrator internal volume 51 and/or marine acoustic vibrator internal gas pressure at a constant value due to a remaining stiffness in the spring function system 53 and/or a remaining friction of the mechanical load of the compliance chamber piston 50 and/or the inertial forces of the moving masses. That is, there may be pressure variations of the marine acoustic vibrator internal gas that affect the effective stiffness of the marine acoustic vibrator gas-spring 55 and/or the friction of the mechanical load experienced by the actuator of the sound radiating surface 25, which in turn may affect the resonance frequency of the marine acoustic vibrator. A linear motor 90 is used to mitigate these pressure variations by reducing or eliminating any remaining effects of the stiffness of the spring function system 53 and/or friction of the mechanical load of the compliance chamber piston 50 and/or any of the inertial forces of the moving masses which may occur during actuation of the sound radiating surface 25 and of the compliance piston 50. In embodiments, the linear motor 90 is attached to the compliance chamber piston 50. The linear motor 90 may comprise, but should not be limited to, an electromagnetic motor, hydraulic motor, pneumatic motor, voice coil motor, and the like. In embodiments, the linear motor 90 may be a multi-pole motor. In embodiments, the linear motor 90 may be disposed within the marine acoustic vibrator internal volume 51 or within the compliance chamber internal volume 52. In embodiments, the linear motor 90 may apply a defined force with a defined stroke to the compliance chamber piston 50. The force applied by the linear motor 90 may be directly proportional to a remaining stiffness in the spring function system 53 and/or a remaining friction of the mechanical load of the compliance chamber piston 50 and/or the inertial forces of any of the moving masses. Thus, a stroke of the linear motor 90 may correspond to a displaced volume or volumes of the sound radiating surfaces 25 of the flextensional shell marine acoustic vibrator 5 such that the stroke also may correspond to a displaced volume in the compliance chamber internal volume 52. Therefore, the stroke may be capable of reducing at least a portion of the effects of the stiffness of the spring function system and inertial forces of moving masses in the compliance chamber. Further, if desired, a negative stiffness value for the marine acoustic vibrator gas-spring 55 may be attained by counteracting the elastic forces of the marine acoustic vibrator gas-spring 55 caused by the structure of the sound radiating surface 25. As such, the resonance frequency of the flextensional shell marine acoustic vibrator 5 may be lowered such that it is below a nominal resonance frequency of the flextensional shell marine acoustic vibrator 5.

In embodiments, linear motor 90 is a servomotor that may be operated by a control system 91 as shown in FIGs. 3 and 5. The control system 91 may be used to tie the actuation of the sound radiating surface 25 to the actuation of the compliance chamber piston 50 by the linear motor 90 such that no pressure variation or, in some embodiments, only a small pressure variation occurs in the marine acoustic vibrator internal volume 51. This may be accomplished by monitoring the marine acoustic vibrator internal volume 51 and/or by monitoring the acceleration and/or displacement of sound radiating surface 25. The control system 91 may be a component of a recording system (e.g., recording system 125 in FIG. 8) and may be located on a vessel, (e.g., survey vessel 115 in FIG. 8). Alternatively, the control system 91 may be an internal or external component of a marine acoustic vibrator, for example, flextensional shell marine acoustic vibrator 5. In some embodiments, the control system 91 may be automated and may reactively respond to fluctuations in the marine acoustic vibrator internal volume 51.

As illustrated by FIGs. 3 and 5, compliance chamber 10 and linear motor 90 may be connected to an internal fixture 95 of flextensional shell marine acoustic vibrator 5. Internal fixture 95 may be any such fixture sufficient for attachment of a compliance chamber 10 and/or a linear motor 90. For example, internal fixture 95 may be an interior side of a flextensional shell marine acoustic vibrator 5, a section of frame 15 (as shown in FIG. 1) disposed on the interior of flextensional shell marine acoustic vibrator 5, or any other internal fixture 95 disposed within flextensional shell marine acoustic vibrator 5. In embodiments, compliance chamber 10 and linear motor 90 may be attached to the same internal fixture 95. In alternative embodiments, compliance chamber 10 and linear motor 90 may be attached to separate internal fixtures 95.

Operation of compliance chamber 10, with continued reference to FIGs. 3 and 5, will now be described in accordance with embodiments. Compliance chamber 10 operates due to pressure variations generated by actuation of the sound radiating surface which may generate a force against compliance chamber piston 50 that may move compliance chamber piston 50 further into the interior of compliance chamber internal volume 52. This force may be counteracted by a counteracting force resulting from the spring function system 53 (e.g., nonlinear spring element 65 as illustrated in FIG. 3 or linear high pressure gas-spring 66 as illustrated in FIG. 5). By way of example, the pressure variations may be caused by a displacement of a portion of the marine acoustic vibrator internal volume 51 as the sound radiating surface 25 is operated at depth. For example, sound radiating surface 25 (illustrated as flextensional shell 30 in the embodiment of FIG. 3) may flex back and forth to generate acoustic vibrations. In the illustrated embodiment, movement of flextensional shell 30 may be induced by an actuator (not shown). The pressure variations between the marine acoustic vibrator internal gas pressure and the compliance chamber internal gas pressure may result in a force against compliance chamber piston 50 that consequently displaces compliance chamber piston 50 into the compliance chamber internal volume 52. Such a displacement may increase the counteracting force resulting from the stiffening of the spring function system 53. Such a displacement may also increase the compliance chamber internal gas pressure within the compliance chamber internal volume 52 if a gas is present in any appreciable amount. Any remaining stiffness in the spring function system 53 and/or any remaining friction of the mechanical load of the compliance chamber piston 50 and/or any inertial force of any of the moving masses may prevent the counteracting force generated by the spring function system 53 from force balancing the force against the exterior of the compliance chamber piston 50 that is generated by operation of the flextensional shell 30 (i.e., the force that increases the aforementioned pressure differential across the compliance chamber piston 50) during operation of the flextensional shell marine acoustic vibrator 5. Thus, a remaining stiffness in the spring function system 53 and/or a remaining friction of the mechanical load of the compliance chamber piston 50 and/or an inertial force of any moving mass may influence the resonance frequency of the flextensional shell marine acoustic vibrator 5 as it is operated. A linear motor 90 is used to counteract the effects of this remaining stiffness in the spring function system 53 and/or remaining friction of the mechanical load of the compliance chamber piston 50 and/or the inertial force of any of the moving masses. The linear motor 90 is operable to actively apply a defined force with a defined stroke to the compliance chamber piston 50. The linear motor 90 acts in tandem with the spring function system 53, to force balance the force generated by operation of the flextensional shell 30 during operation of the flextensional shell marine acoustic vibrator 5. Therefore, the stroke is capable of reducing at least a portion of the effects of the stiffness of the spring function system and inertial forces of moving masses in the compliance chamber 10.

The forces exerted by the spring function system 53 and the linear motor 90 may be approximately proportional to the force exerted by the marine acoustic vibrator gas-spring 55 in the flextensional shell marine acoustic vibrator 5 as the flextensional shell marine acoustic vibrator 5 is operated. This ability of the compliance chamber 10 to effect an approximately proportional response to the force exerted by the marine acoustic vibrator gas-spring 55 as the flextensional shell marine acoustic vibrator 5 is operated allows for the marine acoustic vibrator internal gas pressure to equalize with the hydrostatic pressure. Therefore, the flextensional shell marine acoustic vibrator 5 may be able to maintain a consistent resonance frequency (within a tolerance range) independent of the depth at which it is operated. Thus, this functionality allows for operation of a marine acoustic vibrator at different depths, and as such, the marine acoustic vibrator does not need to be maintained at a constant depth in order to function. For example, in an embodiment, a marine acoustic vibrator may be disposed and operated at a first depth, wherein the marine acoustic vibrator may have a first resonance frequency and a first marine acoustic vibrator internal gas pressure at the first depth, and the marine acoustic vibrator may be subsequently disposed and operated at a second depth greater than the first depth, wherein the marine acoustic vibrator may have a second resonance frequency and a second marine acoustic vibrator internal gas pressure at the second depth. In this example, the spring function system 53 and the linear motor 90 may be used to adjust the first marine acoustic vibrator internal gas pressure and the second marine acoustic vibrator internal gas pressure such that the first resonance frequency differs from the second resonance frequency by no more than 25%. For example, the first resonance frequency may differ from the second resonance frequency by no more than 20%, by no more than 15%, by no more than 10%, or by no more than 5%.

FIG. 6 illustrates a compliance chamber 10 within a flextensional shell marine acoustic vibrator 5. The compliance chamber 10 illustrated in FIG. 6 is a type of nonlinear spring compliance chamber 10 (i.e. a compliance chamber 10 where the spring function system 53 comprises a nonlinear spring element) known as a flextensional shell compliance chamber 10. Flextensional shell compliance chamber 10 comprises a nonlinear spring element 65 represented by flextensional outer shell 105. Flextensional shell compliance chamber 10 further comprises internal fixture 95 and a linear motor 90 which is coupled to the internal fixture 95 and the flextensional outer shell 105. In some embodiments, the compliance chamber internal gas pressure may be a low pressure as defined herein. In the embodiment described by FIG. 6, the marine acoustic vibrator internal gas pressure may increase as the flextensional shell marine acoustic vibrator 5 is towed at depth. Consequently, the marine acoustic vibrator gas-spring 55 may stiffen. This increase in the marine acoustic vibrator internal gas pressure may exert a force which induces buckling in the flextensional outer shell 105. The buckling of the flextensional outer shell 105 may reduce the stiffening of the marine acoustic vibrator gas-spring 55. Any effects of the stiffness remaining in the flextensional outer shell 105 may be mitigated by the use of the linear motor 90. As discussed above, linear motor 90, as illustrated in FIG. 6, may be coupled to the midpoint of internal fixture 95. The forces exerted by the flextensional outer shell 105 and the linear motor 90 may be approximately proportional to the force exerted by the marine acoustic vibrator gas-spring 55 in the flextensional shell marine acoustic vibrator 5 as the flextensional shell marine acoustic vibrator 5 is operated. The flextensional shell compliance chamber 10 has the ability to effect an approximately proportional response to the force exerted by the marine acoustic vibrator gas-spring 55 as the flextensional shell marine acoustic vibrator 5 is operated, thereby allowing for the marine acoustic vibrator internal gas pressure to equalize with the hydrostatic pressure. Therefore, the flextensional shell marine acoustic vibrator 5 may be able to maintain a consistent resonance frequency (within a tolerance range) independent of the depth at which it is operated.

FIG. 7 illustrates a compliance chamber 10 that is functionally similar to the nonlinear spring compliance chamber embodiment illustrated in FIG. 3, with the exception that the compliance chamber 10 is external to the flextensional shell marine acoustic vibrator 5 and is enclosed within towing structure 111. In the embodiment illustrated in FIG. 7, the spring function system 53 comprises a compliance chamber gas-spring 60. Compliance chamber gas-spring 60 (e.g., a nonlinear spring element 65) exerts a counteracting force on compliance chamber piston 50 to counteract the force exerted by the marine acoustic vibrator gas-spring 55 as the marine acoustic vibrator internal gas pressure increases as the flextensional shell marine acoustic vibrator 5 is towed at depth. Linear motor 90 mitigates any effects of the remaining stiffness in the compliance chamber gas-spring 60 and/or any remaining friction of the mechanical load of the compliance chamber piston 50 and/or any of the inertial forces of the moving masses. In order to achieve compliance chamber internal volume 52 of sufficient size to provide a compliance chamber gas-spring 60 that can function as a sufficient nonlinear spring element 65, a compliance chamber 10 with increased compliance chamber internal volume 52 may be disposed exterior to the flextensional shell marine acoustic vibrator 5. The large compliance chamber internal volume 52 may be disposed within a stiff structure fixed to the flextensional shell marine acoustic vibrator 5. This structure may comprise a structure used to tow the flextensional shell marine acoustic vibrator 5 such as towing structure 111. Towing structure 111 may comprise a pipe, tube, hose, cavity, etc. that is integrated into towing structure 111 and can comprise compliance chamber 10 and its compliance chamber internal volume 52. The compliance chamber 10 is a separate exterior component of the flextensional shell marine acoustic vibrator 5 that is coupled to it. An outlet of the flextensional shell marine acoustic vibrator 5 may place the marine acoustic vibrator internal volume 51 in contact with the compliance chamber piston 50.

In some embodiments, the marine acoustic vibrator (e.g., flextensional shell marine acoustic vibrator 5, piston plate marine acoustic vibrator 35, etc.) may produce at least one resonance frequency between about 1 Hz to about 200 Hz when submerged in water at a depth of from about 0 meters to about 300 meters. In alternative embodiments, the marine acoustic vibrator may produce at least one resonance frequency between about 0.1 Hz and about 100 Hz, alternatively, between about 0.1 Hz and about 10 Hz, and alternatively, between about 0.1 Hz and about 5 Hz when submerged in water at a depth of from about 0 meters to about 300 meters. The marine acoustic vibrator may be referred to as a very low frequency source where it has at least one resonance frequency of about 10 Hz or lower.

FIG. 8 illustrates an example technique for acquiring geophysical data that may be used with embodiments of the present techniques. In the illustrated embodiment, a survey vessel 115 moves along the surface of a body of water 120, such as a lake or ocean. The survey vessel 115 may include thereon equipment, shown generally at 125 and collectively referred to herein as a "recording system." The recording system 125 may include devices (none shown separately) for detecting and making a time indexed record of signals generated by each of the seismic sensors 130 (explained further below) and for actuating a marine acoustic vibrator (illustrated here as flextensional shell marine acoustic vibrator 5) at selected times. The recording system 125 may also include devices (none shown separately) for determining the geodetic position of the survey vessel 115 and the various seismic sensors 130.

As illustrated, survey vessel 115 (or any suitable vessel) may tow one or more flextensional shell marine acoustic vibrators 5 in the body of water 120. In other embodiments, either in addition to or in place of the towed flextensional shell marine acoustic vibrators 5, one or more flextensional shell marine acoustic vibrators 5 may be disposed at relatively fixed positions in the body of water 120, for example, attached to an anchor, fixed platform, anchored buoy, etc. Source cable 135 may couple a flextensional shell marine acoustic vibrator 5 to the survey vessel 115. The flextensional shell marine acoustic vibrator 5 may be disposed in the body of water 120 at a depth ranging from 0 meters to about 300 meters, for example. While only a single flextensional shell marine acoustic vibrator 5 is shown in FIG. 8, it is contemplated that embodiments may include more than one marine acoustic vibrators (including piston plate marine acoustic vibrator 35 as illustrated in FIG. 2 or any other type of marine acoustic vibrator) towed by survey vessel 115. In some embodiments, one or more arrays of flextensional shell marine acoustic vibrators 5 may be used. At selected times, flextensional shell marine acoustic vibrator 5 may be actuated, for example, by recording system 125, to generate acoustic energy. Survey vessel 115 (or a different vessel) may further tow at least one sensor streamer 140 to detect the acoustic energy that originated from the flextensional shell marine acoustic vibrator 5 after it has interacted, for example, with formations 145 below water bottom 150. As illustrated, both the flextensional shell marine acoustic vibrator 5 and the sensor streamer 140 may be towed above water bottom 150. Sensor streamer 140 may contain seismic sensors 130 thereon at spaced apart locations. In some embodiments, more than one sensor streamer 140 may be towed by survey vessel 115, which may be spaced apart laterally, vertically, or both laterally and vertically. While not shown, some marine seismic surveys locate flextensional shell marine acoustic vibrators 5 and/or seismic sensors 130 on ocean bottom cables or nodes in addition to, or instead of, towing from survey vessel 115. Seismic sensors 130 may be any type of seismic sensors known in the art, including hydrophones, geophones, particle velocity sensors, particle displacement sensors, particle acceleration sensors, or pressure gradient sensors, for example. By way of example, seismic sensors 130 may generate response signals, such as electrical or optical signals, in response to detected acoustic energy. Signals generated by seismic sensors 130 may be communicated to recording system 125. The detected energy may be used to infer certain properties of the formations 145, such as structure, mineral composition and fluid content, thereby providing information useful in the recovery of hydrocarbons.

The foregoing figures and discussion are not intended to include all features of the present invention. The invention is defined by the appended claims.

## Claims

1. A marine acoustic vibrator comprising:
a sound radiating surface (25) operable to produce a resonance frequency, wherein the sound radiating surface at least partially defines a marine acoustic vibrator internal volume, wherein the marine acoustic vibrator internal volume comprises a marine acoustic vibrator internal gas having a marine acoustic vibrator internal gas pressure, wherein the sound radiating surface is operable to radiate and displace a volume of the marine acoustic vibrator internal volume;
at least one compliance chamber (10), wherein the compliance chamber comprises:
a compliance chamber internal volume (52),
a compliance chamber piston (50) operable to move into the compliance chamber internal volume in response to pressure variations caused by operation of the sound radiating surface (25) that generate a force against the compliance chamber piston, and
a spring function system (53) coupled to the compliance chamber piston (50) that provides a counteracting force against the force generated by the sound radiating surface;
**characterised in that** it further comprises:
a linear motor (90) coupled to the compliance chamber piston (50) operable to provide a defined force to the compliance chamber piston (50) to reduce stiffness effects of the spring function system (53) on movement of the compliance chamber piston (50) in response to the pressure variations;
wherein the pressure variations in the marine acoustic vibrator internal volume generated by actuation of the sound radiating surface (25) induce the spring function system (53) and the linear motor (90) to adjust the compliance chamber internal volume and in turn the marine acoustic vibrator internal volume such that the pressure variations in the marine acoustic vibrator internal volume are reduced.

2. The marine acoustic vibrator of claim 1, wherein the spring function system (53) comprises one of a flextensional shell compliance chamber, a linear high pressure gas-spring, and a nonlinear spring element (65).

3. The marine acoustic vibrator of any of the preceding claims, wherein the at least one compliance chamber (10) is external to the marine acoustic vibrator.

4. The marine acoustic vibrator of any of the preceding claims, wherein the linear motor (90) is an electromagnetic motor, hydraulic motor, pneumatic motor, or voice coil motor.

5. The marine acoustic vibrator of any of the preceding claims, wherein the marine acoustic vibrator is a flextensional shell marine acoustic vibrator, a piston plate marine acoustic vibrator, a hydraulically powered marine acoustic vibrator, an electro-mechanical marine acoustic vibrator, an electrical marine acoustic vibrator, an electrical machine marine acoustic vibrator, a marine acoustic vibrator employing an electrostrictive material, or a marine acoustic vibrator employing a magnetostrictive material.

6. The marine acoustic vibrator of any of the preceding claims, wherein the linear motor (90) is adapted to reduce at least a portion of the effects of the stiffness of the spring function system (53) and inertial forces of moving masses in the compliance chamber (10).

7. The marine acoustic vibrator of any of the preceding claims, wherein the linear motor (90) is coupled to a control system.

8. A method comprising:
disposing a marine acoustic vibrator comprising at least one compliance chamber (10) in a body of water in conjunction with a marine seismic survey, wherein the compliance chamber (10) comprises a compliance chamber internal volume (52), a compliance chamber piston (50), and a spring function system (53) coupled to the compliance chamber piston,
actuating a sound radiating surface (25) in the marine acoustic vibrator to produce a resonance frequency, the actuating resulting in a pressure variation of a marine acoustic vibrator internal volume that generates a force against the compliance chamber causing the compliance chamber piston (50) to move into the compliance chamber internal volume (53), wherein the spring function system (53) provides a counteracting force against the force generated by the sound radiating surface;
the method **characterised in** comprising:
using a linear motor (90) to produce a stroke and a defined force to the compliance chamber piston (50) to reduce stiffness effects of the spring function system on movement of the compliance chamber piston in response to the pressure variation.

9. The method of claim 8, wherein the at least one compliance chamber (10) comprises a compliance chamber piston, wherein the stroke is preferably applied to the compliance chamber piston.

10. The method of claim 8 or claim 9, wherein the spring function system (53) comprises a nonlinear spring element disposed in the compliance chamber internal volume (52), wherein the nonlinear spring element adjusts the compliance chamber internal volume.

11. The method of any of claims 8 to 10, wherein the linear motor (90) is an electromagnetic motor, hydraulic motor, pneumatic motor, or voice coil motor.

12. The method of any of claims 8 to 11, wherein the method further comprises:
disposing the marine acoustic vibrator in the body of water at a first depth, wherein the marine acoustic vibrator has a first resonance frequency at the first depth, and a first marine acoustic vibrator internal gas pressure at the first depth;
subsequently disposing the marine acoustic vibrator in the body of water at a second depth, wherein the second depth is greater than the first depth, and wherein the marine acoustic vibrator has a second resonance frequency at the second depth and a second marine acoustic vibrator internal gas pressure at the second depth; and
using the linear motor and a spring function system to adjust the first marine acoustic vibrator internal gas pressure and the second marine acoustic vibrator internal gas pressure such that the first resonance frequency differs from the second resonance frequency by no more than 25%.

13. The method of any of claims 8 to 12, wherein the marine acoustic vibrator is a flextensional shell marine acoustic vibrator, a piston plate marine acoustic vibrator, a hydraulically powered marine acoustic vibrator, an electro-mechanical marine acoustic vibrator, an electrical marine acoustic vibrator, an electrical machine marine acoustic vibrator, a marine acoustic vibrator employing an electrostrictive material, or a marine acoustic vibrator employing a magnetostrictive material.

## Patentansprüche

1. Meeresakustischer Rüttler, der Folgendes umfasst:
eine schallabstrahlende Oberfläche (25), die bedient werden kann, um eine Resonanzfrequenz zu erzeugen, wobei die schallabstrahlende Oberfläche zumindest teilweise ein Innenvolumen des meeresakustischen Rüttlers definiert, wobei das Innenvolumen des meeresakustischen Rüttlers ein Innengas des meeresakustischen Rüttlers mit einem Gasinnendruck des meeresakustischen Rüttlers umfasst, wobei die schallabstrahlende Oberfläche bedient werden kann, um ein Volumen des Innenvolumens des meeresakustischen Rüttlers abzustrahlen und zu verdrängen;
mindestens eine Ausgleichskammer (10), wobei die Ausgleichskammer Folgendes umfasst:
ein Innenvolumen der Ausgleichskammer (52), einen Ausgleichskammerkolben (50), der bedient werden kann, um sich in das Innenvolumen der Ausgleichskammer zu bewegen, als Reaktion auf Druckschwankungen, die durch die Bedienung der schallabstrahlenden Oberfläche (25) verursacht werden und eine Kraft gegen den Ausgleichskammerkolben erzeugen, und ein Federfunktionssystem (53), das mit dem Ausgleichskammerkolben (50) gekoppelt ist und eine Gegenkraft gegen die von der schallabstrahlenden Oberfläche erzeugte Kraft bereitstellt;
**dadurch gekennzeichnet, dass** sie ferner Folgendes umfasst:
einen Linearmotor (90), der mit dem Ausgleichskammerkolben (50) gekoppelt ist, der bedient werden kann, um eine definierte Kraft auf den Ausgleichskammerkolben (50) bereitzustellen, um die Steifigkeitswirkungen des Federfunktionssystems (53) auf die Bewegung des Ausgleichskammerkolbens (50) als Reaktion auf die Druckschwankungen zu reduzieren;
wobei die Druckschwankungen im Innenvolumen des meeresakustischen Rüttlers, die durch die Betätigung der schallabstrahlenden Oberfläche (25) erzeugt werden, das Federfunktionssystem (53) und den Linearmotor (90) dazu veranlassen, das Innenvolumen der Ausgleichskammer und wiederum das Innenvolumen des meeresakustischen Rüttlers derart einzustellen, dass die Druckschwankungen im Innenvolumen des meeresakustischen Rüttlers reduziert werden.

2. Meeresakustischer Rüttler nach Anspruch 1, wobei das Federfunktionssystem (53) eines aus einer flexiblen Schalenausgleichskammer, einer linearen Hochdruckgasfeder und einem nichtlinearen Federelement (65) umfasst.

3. Meeresakustischer Rüttler nach einem der vorangehenden Ansprüche, wobei die mindestens eine Ausgleichskammer (10) außerhalb des meeresakustischen Rüttlers liegt.

4. Meeresakustischer Rüttler nach einem der vorangehenden Ansprüche, wobei der Linearmotor (90) ein elektromagnetischer Motor, Hydraulikmotor, Pneumatikmotor oder Schwingspulenmotor ist.

5. Meeresakustischer Rüttler nach einem der vorangehenden Ansprüche, wobei der meeresakustische Rüttler ein flexibler meeresakustischer Schalenrüttler, ein meeresakustischer Kolbenplattenrüttler, ein hydraulisch angetriebener meeresakustischer Rüttler, ein elektromechanischer meeresakustischer Rüttler, ein elektrischer meeresakustischer Rüttler, ein elektrischer meeresakustischer Maschinenrüttler, ein meeresakustischer Rüttler, der ein elektrostriktives Material verwendet, oder ein meeresakustischer Rüttler, der ein magnetostriktives Material verwendet, ist.

6. Meeresakustischer Rüttler nach einem der vorangehenden Ansprüche, wobei der Linearmotor (90) angepasst ist, um zumindest einen Abschnitt der Steifigkeitswirkungen des Federfunktionssystems (53) und der Trägheitskräfte von bewegten Massen in der Ausgleichskammer (10) zu reduzieren.

7. Meeresakustischer Rüttler nach einem der vorangehenden Ansprüche, wobei der Linearmotor (90) an ein Steuersystem gekoppelt ist.

8. Verfahren, das Folgendes umfasst:
Anordnen eines meeresakustischen Rüttlers, der mindestens eine Ausgleichskammer (10) in einem Gewässer in Verbindung mit einer meeresseismischen Untersuchung umfasst, wobei die Ausgleichskammer (10) ein Innenvolumen der Ausgleichskammer (52), einen Ausgleichskammerkolben (50) und ein mit dem Ausgleichskammerkolben gekoppeltes Federfunktionssystem (53) umfasst, das eine schallabstrahlende Oberfläche (25) in dem meeresakustischen Rüttler betätigt, um eine Resonanzfrequenz zu erzeugen, wobei das Betätigen in einer Druckschwankung des Innenvolumens des meeresakustischen Rüttlers resultiert, die eine Kraft gegen die Ausgleichskammer erzeugt, die den Ausgleichskammerkolben (50) veranlasst, sich in das Innenvolumen der Ausgleichskammer (53) zu bewegen, wobei das Federfunktionssystem (53) eine Gegenkraft gegen die von der schallabstrahlenden Oberfläche erzeugte Kraft bereitstellt;
wobei das Verfahren **dadurch gekennzeichnet ist, dass** es Folgendes umfasst:
Verwenden eines Linearmotors (90), um einen Hub und eine definierte Kraft auf den Ausgleichskammerkolben (50) zu erzeugen, um die Steifigkeitswirkungen des Federfunktionssystems auf die Bewegung des Ausgleichskammerkolbens als Reaktion auf die Druckschwankung zu reduzieren.

9. Verfahren nach Anspruch 8, wobei die mindestens eine Ausgleichskammer (10) einen Ausgleichskammerkolben umfasst, wobei der Hub vorzugsweise auf den Ausgleichskammerkolben aufgebracht wird.

10. Verfahren nach Anspruch 8 oder 9, wobei das Federfunktionssystem (53) ein nichtlineares Federelement umfasst, das in dem Innenvolumen der Ausgleichskammer (52) angeordnet ist, wobei das nichtlineare Federelement das Innenvolumen der Ausgleichskammer einstellt.

11. Verfahren nach einem der Ansprüche 8 bis 10, wobei der Linearmotor (90) ein elektromagnetischer Motor, Hydraulikmotor, Pneumatikmotor oder Schwingspulenmotor ist.

12. Verfahren nach einem der Ansprüche 8 bis 11, wobei das Verfahren ferner Folgendes umfasst:
Anordnen des meeresakustischen Rüttlers im Gewässer in einer ersten Tiefe, wobei der meeresakustische Rüttler eine erste Resonanzfrequenz in der ersten Tiefe und einen ersten Innengasdruck des meeresakustischen Rüttlers in der ersten Tiefe aufweist;
nachfolgendes Anordnen des meeresakustischen Rüttlers im Gewässer in einer zweiten Tiefe, wobei die zweite Tiefe größer als die erste Tiefe ist, und wobei der meeresakustische Rüttler eine zweite Resonanzfrequenz in der zweiten Tiefe und einen zweiten Innengasdruck des meeresakustischen Rüttlers in der zweiten Tiefe aufweist; und
Verwenden des Linearmotors und eines Federfunktionssystems, um den ersten Innengasdruck des meeresakustischen Rüttlers und den zweiten Innengasdruck des meeresakustischen Rüttlers derart einzustellen, dass die erste Resonanzfrequenz von der zweiten Resonanzfrequenz um nicht mehr als 25 % abweicht.

13. Verfahren nach einem der Ansprüche 8 bis 12, wobei der meeresakustische Rüttler ein flexibler meeresakustischer Schalenrüttler, ein meeresakustischer Kolbenplattenrüttler, ein hydraulisch angetriebener meeresakustischer Rüttler, ein elektromechanischer meeresakustischer Rüttler, ein elektrischer meeresakustischer Rüttler, ein elektrischer meeresakustischer Maschinenrüttler, ein meeresakustischer Rüttler, der ein elektrostriktives Material verwendet, oder ein meeresakustischer Rüttler, der ein magnetostriktives Material verwendet, ist.

## Revendications

1. Vibrateur acoustique marin comprenant :
une surface de rayonnement sonore (25) pouvant fonctionner pour produire une fréquence de résonance, dans lequel la surface de rayonnement sonore définit au moins partiellement un volume interne de vibrateur acoustique marin, dans lequel le volume interne de vibrateur acoustique marin comprend un gaz interne de vibrateur acoustique marin présentant une pression de gaz interne de vibrateur acoustique marin, dans lequel la surface de rayonnement sonore peut fonctionner pour rayonner et déplacer un volume du volume interne du vibrateur acoustique marin ;
au moins une chambre de compliance (10), dans lequel la chambre de compliance comprend :
un volume interne de chambre de compliance (52),
un piston de chambre de compliance (50) pouvant se déplacer dans le volume interne de la chambre de compliance en réponse aux variations de pression provoquées par le fonctionnement de la surface de rayonnement sonore (25) qui génèrent une force contre le piston de la chambre de compliance, et
un système de fonction de ressort (53) accouplé au piston de chambre de compliance (50) qui fournit une force de réaction contre la force générée par la surface de rayonnement sonore ;
**caractérisé en ce qu'**il comprend en outre :
un moteur linéaire (90) accouplé au piston de chambre de compliance (50) pouvant fonctionner pour fournir une force définie au piston de chambre de compliance (50) afin de réduire les effets de rigidité du système de fonction de ressort (53) lors du mouvement du piston de chambre de compliance (50) en réponse aux variations de pression ;
dans lequel les variations de pression dans le volume interne du vibrateur acoustique marin générées par l'actionnement de la surface de rayonnement sonore (25) induisent le système de fonction de ressort (53) et le moteur linéaire (90) afin de régler le volume interne de la chambre de compliance et, en retour, du volume interne du vibrateur acoustique marin de telle sorte que les variations de pression dans le volume interne du vibrateur acoustique marin sont réduites.

2. Vibrateur acoustique marin selon la revendication 1, dans lequel le système de fonction de ressort (53) comprend l'une d'une chambre de compliance à enveloppe flextensionnelle, un ressort à gaz linéaire haute pression et un élément de ressort non linéaire (65).

3. Vibrateur acoustique marin selon l'une quelconque des revendications précédentes, dans lequel l'au moins une chambre de compliance (10) est externe au vibrateur acoustique marin.

4. Vibrateur acoustique marin selon l'une quelconque des revendications précédentes, dans lequel le moteur linéaire (90) est un moteur électromagnétique, un moteur hydraulique, un moteur pneumatique ou un moteur à bobine mobile.

5. Vibrateur acoustique marin selon l'une quelconque des revendications précédentes, dans lequel le vibrateur acoustique marin est un vibrateur acoustique marin à enveloppe flextensionnelle, un vibrateur acoustique marin à plaque de piston, un vibrateur acoustique marin à alimentation hydraulique, un vibrateur acoustique marin électromécanique, un vibrateur acoustique marin électrique, un vibrateur acoustique marin de machine électrique, un vibrateur acoustique marin utilisant un matériau électrostrictif, ou un vibrateur acoustique marin utilisant un matériau magnétostrictif.

6. Vibrateur acoustique marin selon l'une quelconque des revendications précédentes, dans lequel le moteur linéaire (90) est conçu pour réduire au moins une partie des effets de la rigidité du système de fonction de ressort (53) et des forces d'inertie des masses en mouvement dans la chambre de compliance (10).

7. Vibrateur acoustique marin selon l'une quelconque des revendications précédentes, dans lequel le moteur linéaire (90) est accouplé à un système de commande.

8. Procédé comprenant :
la mise en place d'un vibrateur acoustique marin comprenant au moins une chambre de compliance (10) dans un plan d'eau en conjonction avec un levé sismique marin, dans lequel la chambre de compliance (10) comprend un volume interne de chambre de compliance (52), un piston de chambre de compliance (50), et un système de fonction de ressort (53) accouplé au piston de la chambre de compliance,
l'actionnement d'une surface de rayonnement sonore (25) dans le vibrateur acoustique marin afin de produire une fréquence de résonance, l'actionnement entraînant une variation de pression du volume interne d'un vibrateur acoustique marin qui génère une force contre la chambre de compliance provoquant le déplacement du piston (50) de la chambre de compliance dans le volume interne (53) de la chambre de compliance, dans lequel le système de fonction de ressort (53) fournit une force de réaction contre la force générée par la surface de rayonnement sonore ;
le procédé étant **caractérisé en ce qu'**il comprend :
l'utilisation d'un moteur linéaire (90) pour produire une course et une force définies sur le piston de chambre de compliance (50) afin de réduire les effets de rigidité du système de fonction de ressort sur le mouvement du piston de chambre de compliance en réponse à la variation de pression.

9. Procédé selon la revendication 8, dans lequel l'au moins une chambre de compliance (10) comprend un piston de chambre de compliance, la course étant de préférence appliquée au piston de chambre de compliance.

10. Procédé selon la revendication 8 ou la revendication 9, dans lequel le système de fonction de ressort (53) comprend un élément de ressort non linéaire mis en place dans le volume interne de la chambre de compliance (52), l'élément de ressort non linéaire ajustant le volume interne de la chambre de compliance.

11. Procédé selon l'une quelconque des revendications 8 à 10, dans lequel le moteur linéaire (90) est un moteur électromagnétique, un moteur hydraulique, un moteur pneumatique ou un moteur à bobine mobile.

12. Procédé selon l'une quelconque des revendications 8 à 11, dans lequel le procédé comprend en outre :
la mise en place du vibrateur acoustique marin dans le plan d'eau à une première profondeur, dans lequel le vibrateur acoustique marin présente une première fréquence de résonance à la première profondeur, et une première pression de gaz interne de vibrateur acoustique marin à la première profondeur ;
puis la mise en place du vibrateur acoustique marin dans le plan d'eau à une seconde profondeur, dans lequel la seconde profondeur est supérieure à la première profondeur, et dans lequel le vibrateur acoustique marin présente une seconde fréquence de résonance à la seconde profondeur et une seconde pression de gaz interne de vibrateur acoustique marin à la seconde profondeur ; et
l'utilisation du moteur linéaire et d'un système de fonction de ressort pour régler la pression de gaz interne du premier vibrateur acoustique marin et la pression de gaz interne du second vibrateur acoustique marin de telle sorte que la première fréquence de résonance ne diffère pas de la seconde fréquence de résonance de plus de 25 %.

13. Procédé selon l'une quelconque des revendications 8 à 12, dans lequel le vibrateur acoustique marin est un vibrateur acoustique marin à enveloppe flextensionnelle, un vibrateur acoustique marin à plaque de piston, un vibrateur acoustique marin à alimentation hydraulique, un vibrateur acoustique marin électromécanique, un vibrateur acoustique marin électrique, un vibrateur acoustique marin de machine électrique, un vibrateur acoustique marin utilisant un matériau électrostrictif, ou un vibrateur acoustique marin utilisant un matériau magnétostrictif.
